Europäisches Patentamt

European Patent Office

Office européen des brevets

(19)

(11) Veröffentlichungsnummer: **0 185 278 B1**

(12) **EUROPÄISCHE PATENTSCHRIFT**

(45) Veröffentlichungstag der Patentschrift: **26.06.91**

(51) Int. Cl.⁵: **G01P 5/12, G01F 1/68**

(21) Anmeldenummer: **85115593.7**

(22) Anmeldetag: **07.12.85**

(54) **Verfahren zum Messen der Geschwindigkeit eines fluiden Mediums und Schaltung zur Durchführung des Verfahrens.**

(30) Priorität: **21.12.84 DE 3447552**

(43) Veröffentlichungstag der Anmeldung:
**25.06.86 Patentblatt 86/26**

(45) Bekanntmachung des Hinweises auf die
Patenterteilung:
**26.06.91 Patentblatt 91/26**

(84) Benannte Vertragsstaaten:
**AT BE CH DE FR GB IT LI LU NL SE**

(56) Entgegenhaltungen:
**DE-A- 2 852 904**
**DE-A- 3 103 051**
**US-A- 4 319 483**

**ELEKTRO-TECHNIK, Nr. 36, 29. Dezember 1965, Seiten 791-794, Würzburg, DE; H. KAISER: "Kaltleiter in der Mess- und Regelungstechnik"**

(73) Patentinhaber: **Joh. Vaillant GmbH u. Co.**
**Berghauser Strasse 40 Postfach 10 10 20**
**W-5630 Remscheid 1(DE)DE IT LU SE**

Patentinhaber: **n.v. Vaillant s.a.**
**rue Golden Hopestraat 15**
**B-1620 Drogenbos(BE)BE**

Patentinhaber: **VAILLANT S.A.R.L**
**4, Rue des Oliviers Orly-Sénia 326**
**F-94537 Rungis Cedex(FR)FR**

Patentinhaber: **VAILLANT Ges.m.b.H**
**Forchheimergasse 7 Postfach 56**
**A-1233 Wien(AT)AT**

Patentinhaber: **Vaillant Ltd.**
**Vaillant House Medway City Estate Trident Close**
**Rochester Kent ME2 4EZ(GB)GB**

Patentinhaber: **SCHONEWELLE B.V.**
**Ellermanstraat 17**
**NL-1099 BX Amsterdam(NL)NL**

Patentinhaber: **Vaillant GmbH**
**Riedstrasse 8**
**CH-8953 Dietikon 1(CH)CH LI**

(72) Erfinder: **Hangauer, Wilfried, Dr.**
**Heidenstrasse 15**
**W-5609 Hückeswagen(DE)**


(74) Vertreter: **Heim, Johann-Ludwig, Dipl.-Ing.**
**c/o Joh. Vaillant GmbH u. Co Berghauser**
**Strasse 40 Postfach 10 10 20**
**W-5630 Remscheid 1(DE)**

2

**Beschreibung**

Die vorliegende Erfindung bezieht sich auf ein Verfahren zum Messen der Geschwindigkeit eines fluiden Mediums sowie auf eine Schaltung zur Durchführung des Verfahrens gemäß den Oberbegriffen der unabhängigen Ansprüche.

Im Zuge der Entwicklung brennstoffbeheizter Wärmequellen, seien es Durchlauf-Wasserheizer, Umlauf-Wasserheizer oder Kessel, die mit Gas oder Öl als Brennstoff betrieben werden, hat es sich als zweckmäßig erwiesen, den Luftdurchsatz in Abhängigkeit vom Brennstoffdurchsatz zu steuern, und zwar möglichst so, daß nahezu stöchiometrische Verhältnisse herrschen. Hierzu ist es erforderlich geworden, eine Vorrichtung zu entwickeln, die für den Luftdurchsatz ein Signal bereitstellt. Hierzu eignen sich sogenannte Anemometer, mit denen man die Luftgeschwindigkeit messen kann, bei denen man aber bei bekanntem Kanalquerschnitt aufgrund des Meßsignals für die Geschwindigkeit auf den Durchsatz schließen kann. Mittels des gewonnenen Durchsatzsignals kann man dann den Brennstoffdurchsatz dosieren oder im einfachsten Fall eine Brennstofffreigabe bei ausreichendem Luftdurchsatz ermöglichen.

Es hat sich aber nun gezeigt, daß solche Luftdurchsatzsignale stark mit der Temperatur der zuströmenden Frischluft variieren.

Bekannt ist ein in der US-PS 4 319 483 (von der ausgehend die Oberbegriffe der vorliegenden Ansprüche 1,5 und 7 gebildet worden sind) beschriebenes Verfahren zur Durchflußmessung, bei dem temperaturabhängige Meßwiderstände zum Einsatz kommen. Die Fühlerspannung über den Meßwiderstand ist jedoch nicht ausschließlich und nicht linear von der Temperatur des Mediums abhängig, so daß eine exakte Berücksichtigung des Temperatureinflusses wiederum nicht möglich ist.

Aus der DE-OS 31 03 051 ist ein elektrokalorischer Durchflußmesser bekanntgeworden, bei dem eine Einrichtung zur Kompensation der Fluidtemperatur vorgesehen ist. Dabei wird der den Kaltleiter durchfließende, die Meßgröße widerspiegelnde Strom über eine an einem Meßwiderstand abfallende Spannung erfaßt. Nachteilig hierbei ist vor allem der erhebliche Schaltungsaufwand bei verbleibender beträchtlicher Meßunsicherheit.

Des weiteren ist aus der Zeitschrift Elektro-Technik, Nr. 36, 1965, Seiten 791 - 794, ein Temperaturmeßverfahren unter Verwendung von Kaltleitern bekannt. Kaltleiter weisen eine Sprungcharakteristik, d. h. einen steilen Widerstandsanstieg innerhalb eines kleinen Temperaturbereiches, auf. Die Schwierigkeit liegt darin, daß jeweils der entsprechende Kaltleitertyp mit der passenden Nenntemperatur eingesetzt werden muß.

Auch aus Kaltleiter-Datenbuch, Siemens, 1987/88, Seite 28, geht hervor, daß der Widerstandswert eines Kaltleiters bei zunehmender Temperatur nahezu sprungförmig ansteigt.

Der vorliegenden Erfindung liegt demgemäß die Aufgabe zugrunde, ein Kompensationsverfahren und Schaltungen zur Durchführung des Verfahrens zu entwickeln, um die Temperaturabhängigkeit der Luft zu eliminieren. Zwischen Sommer- und Wintertemperaturen beziehungsweise im Zuge von Aufheizvorgängen bei der Luftzuführung zur brennstoffbeheizten Wärmequelle hat es sich nämlich gezeigt, daß die Lufteintrittstemperatur zwischen etwa -10° und +100° C schwanken kann.

Die Lösung der Aufgabe ist definiert hinsichtlich des Verfahrens im Anspruch 1, hinsichtlich der Schaltungen in den Ansprüchen 5 und 7. Eine spezielle Ausführung der Schaltung besteht darin, daß die Temperaturmeßschaltung mit einem bestimmten und konstanten Bruchteil der Betriebsspannung betrieben ist und daß die Ausgangsspannung der Temperaturmeßschaltung um den Verminderungsfaktor wieder verstärkt wird.

Weitere Ausgestaltungen und besonders vorteilhafte Weiterbildungen der Erfindung sind Gegenstand der abhängigen Ansprüche beziehungsweise gehen aus der nachfolgenden Beschreibung hervor, die ein Ausführungsbeispiel der Erfindung anhand der Figuren näher erläutert.

Es zeigen:

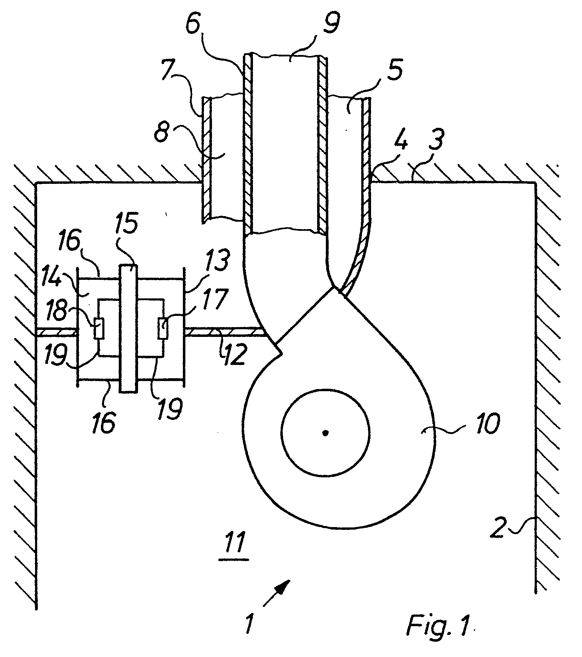

Figur 1 eine Prinzipdarstellung eines Umlauf-Wasserheizers,

Figur 2 die statische Kennlinie eines PTC-Widerstandes,

Figur 3 ein Diagramm und

Figur 4 eine Schaltung, mit der das erfindungsgemäße Verfahren durchgeführt wird.

In allen vier Figuren bedeuten gleiche Bezugszeichen jeweils die gleichen Einzelheiten.

Der Umlauf-Wasserheizer 1 weist ein Gehäuse 2 auf, das an seiner Oberseite 3 einen Auslaß 4 für ein konzentrisches Rohrbündel aufweist, das aus einem innenliegenden Abgasrohr 6 und einem außenliegenden Frischluftrohr 7 besteht, wobei der Ringspalt zwischen den Rohren 6 und 7 den Zuluftkanal 8 und der Innenraum 9 des Rohres 6 den Abgaskanal bildet. Am Beginn des Abgaskanals 6 ist ein Gebläse 10 angeordnet. Der Innenraum 11 des Gehäuses 2 ist durch eine Wandung 12 unterteilt, in die ein Rohrstutzen 13 eingesetzt ist. Über den Innenraum 14 dieses Rohrstutzens steht der Frischluft-Ringkanal 8 mit dem Innenraum 11 in Verbindung, in dem ein Brenner und wenigstens ein Wärmetauscher angeordnet sind. Hierbei bildet das Rohr 13 die Innenwandung eines Kanals, der dadurch aufgeheizt wird, daß zwischen dem im Abgaskanal 9 fließenden heißen Abgas über die Wandung des Innenrohres 6 Wärme auf die Frischluft übertragen wird, die im Ringkanal 8 strömt.

Diese vorerwärmte Frischluft beheizt die Innenwandung des Rohres 13. Aufgrund der Strahlung des im Innenraum 11 vorhandenen Brenners beziehungsweise Wärmetauschers wird die Wandung 13 zusätzlich aufgeheizt, so daß das im Innenraum 14 fließende Medium in der Regel kühler ist als die Wandung 13, es können aber auch umgekehrte Verhältnisse auftreten, beispielsweise beim Anfahren des Gerätes. Dem Innenraum 14 ist ein Anströmkörper 15 zugeordnet, der aus einem massiven Kupferblock besteht. Dieser Block 15 ist wärmeisolierend im Rohr 13 befestigt. Dies kann über Kunststoffstege 16 geschehen, die recht klein bemessen werden können, da sie lediglich den Strömungsdruck aushalten müssen.

Auf den beiden Seiten des Kühlkörpers 15 ist je ein Temperaturfühlerwiderstand angebracht.

Der eine Fühler 17 ist ein elektrisch beheizter PTC-Widerstand, während der Fühler 18 als Siliciumtemperatursensor ausgebildet ist, der nur vom durchströmenden Medium in seiner Temperatur beeinflußt wird.

Die baulichen Verhältnisse des Aufbaus beider Fühler auf dem Anströmkörper 15 sind so gewählt, daß sich die beiden Fühler thermisch nicht beeinflussen.

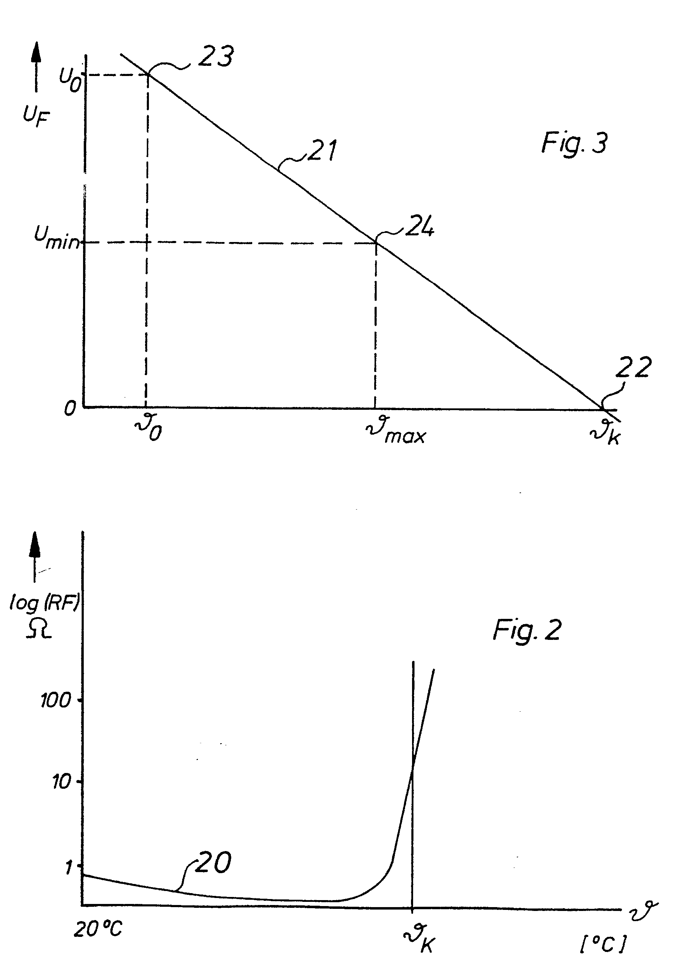

Aus der Figur 2 geht eine Kurve 20 hervor, die den Verlauf des Widerstandswertes eines handelsüblichen PTC-Widerstandes von einer Minimum-Umgebungstemperatur von etwa 20 $°$C bis zu einer Temperatur entsprechend $\vartheta$ K beschreibt. Die Temperatur $\vartheta$ K ist so definiert, daß die Kennlinie des PTC-Widerstandes in diesem Bereich eine angenäherte Sprungfunktion aufweist. Die Abszisse stellt die Temperatur im linearen Maßstab, die Ordinate den Widerstandswert im logarithmischen Maßstab dar. Der PTC-Widerstand wird so gestaltet, daß er im Bereich des Temperaturpunktes von $\vartheta$ K arbeitet. Es sei hierbei vorausgesetzt, daß es PTC-Widerstände mit der unterschiedlichsten Lage des Punktes $\vartheta$ K gibt. Für das Ausführungsbeispiel ist ein $\vartheta$ K-Wert von 180 $°$C gewählt.

Erfindungsgemäß wird nun - vergleiche Figur 3 - vorgeschlagen, daß man den PTC-Widerstand an eine so große Spannung legt, daß die Eigenerwärmung aufgrund des ihn durchfließenden Stroms so groß ist, daß sich der PTC-Widerstand im Bereich der Kennlinie bewegt, die um den $\vartheta$ K-Punkt liegt. Diese Verhältnisse sind dann gewährleistet, wenn eine bestimmte Mindestspannung UF an den PTC-Widerstand angelegt wird.

Gemäß Figur 3 wird von einer Geraden 21 ausgegangen, deren Lage dadurch definiert ist, daß im Punkt 22, der $\vartheta$ K entspricht, diese Gerade die Abszisse schneidet. Die Temperatur entspricht hierbei dem bereits erwähnten Knickpunkt gemäß Figur 2. Ein zweiter Punkt der Geraden kann dadurch festgelegt werden, daß beispielsweise im Punkt 23 bei einer bestimmten vorwählbaren Temperatur $\vartheta$ O eine bestimmte vorgebbare Spannung UO erzielt wird. Hierbei ist nur darauf zu achten, daß die bereits erwähnte Mindestspannung nicht unterschritten wird. Diese Mindestspannung ist in Figur 3 mit Umin. bezeichnet, die zu einem Punkt 24 auf der Kennlinie führt, der eine bestimmte maximale Mediumtemperatur zuzuordnen ist, die mit $\vartheta$ max. bezeichnet wird. Aufgrund dieser Definitionen bleibt der den PTC-Widerstand durchfließende Strom unabhängig von der Umgebungstemperatur konstant, wobei sich hierbei natürlich die Strömungsverhältnisse nicht ändern dürfen. Hieraus folgt, daß abweichende Strömungsverhältnisse zu abweichenden Strömen durch den PTC-Widerstand führen, die dann ihrerseits ein Maß für den Luftdurchsatz sind. Es zeigt sich aber auch, daß die hieraus entwickelte Schaltung beziehungsweise das ihr zugrundeliegende Verfahren den Einfluß der Umgebungstemperatur des Mediums kompensiert.

Aus der praktischen Verwertbarkeit von PTC-Widerständen gemäß Figur 3 folgt, daß aus Gründen allzu hoher Fühlerspannung der Punkt $\vartheta$ K in seiner Temperatur möglichst hoch über die maximale Verwendungstemperatur gelegt werden sollte, mit anderen Worten, die Steilheit der Kurve 21 sollte einen gewissen Wert nicht überschreiten.

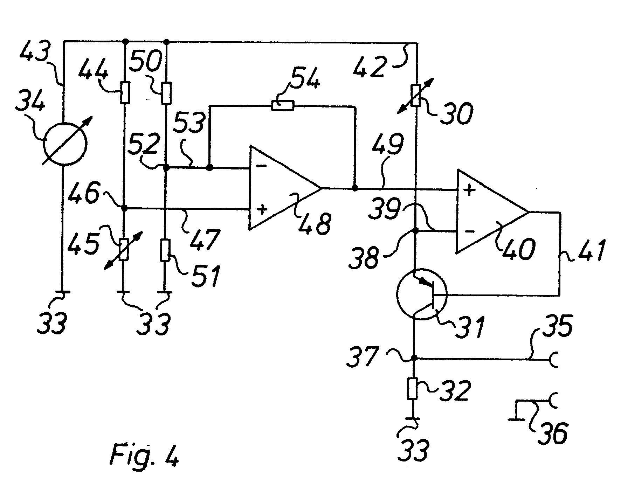

Die Beschaltung des PTC-Widerstandes geht aus der Figur 4 hervor.

Der PTC-Widerstand 30 liegt in Serie mit der Kollektor-Emitterstrecke eines Transistors 31, der über einen Widerstand 32 an den einen Pol 33 einer Betriebsspannungsquelle 34 angeschlossen ist. Hierbei handelt es sich um eine einstellbare Gleichspannungsquelle. Das Ausgangssignal, das ein Maß für die Geschwindigkeit des den Kanal durchfließenden Mediums darstellt, steht einerseits an einer Leitung 35, andererseits an einer Leitung 36 an, wobei die Leitung 36 an den Pol 33 gelegt ist und die Leitung 35 an einen Verbindungspunkt 37 zwischen dem Kollektor des Transistors 31 und dem Widerstand 32.

Der Emitter des Transistors 31 ist mit einem Punkt 38 verbunden, der einerseits mit dem einen Anschluß des PTC-Widerstandes 30, andererseits mit dem invertierenden Eingang 39 eines Operationsverstärkers 40 verbunden ist, dessen Ausgang über eine Leitung 41 mit der Basis des Transistors 31 verbunden ist. Der dem Punkt 38 abgewandte Anschluß des PTC-Widerstandes steht über eine Leitung 42 mit dem zweiten Pol 43 der Betriebsspannungsquelle 34 in Verbindung.

Von der Leitung 42 zweigt eine Serienschaltung zweier Widerstände 44 und 45 ab, die mit dem Pol 33 verbunden ist und deren Mittelpunkt 46 über eine Leitung 47 mit einem Eingang eines weiteren Operationsverstärkers 48 verbunden ist, dessen Ausgang über eine Leitung 49 den anderen Eingang des Operationsverstärkers 40 bildet. Bei dem Widerstand 44 handelt es sich um einen Festwertwiderstand, bei dem Widerstand 45 um einen Widerstand mit positivem Temperaturkoeffizienten, der als Temperaturfühler-Meßwiderstand ausgebildet ist.

Zu den Widerständen 44 und 45 liegen parallel zwischen der Leitung 42 und dem Pol 33 eine weitere Serienschaltung zweier Widerstände 50 und 51, deren Verbindungspunkt 52 mit einer Leitung 53 verbunden ist, die an den invertierenden Eingang des Operationsverstärkers 48 gelegt ist. Bei den Widerständen 50 und 51 handelt es sich um Festwertwiderstände. Die Leitung 53 ist mit einem weiteren Widerstand 54 verbunden, der den invertierenden Eingang des Operationsverstärkers 48 mit dessen Ausgang verbindet und als Gegenkopplungswiderstand dient. Der Widerstand 45 ist bevorzugt als Siliciumwiderstand ausgebildet, er könnte ebensogut als Festwiderstand ausgebildet werden, wenn man einen Meßwiderstand mit negativem Temperaturkoeffizienten anstelle des Festwertwiderstandes 51 anordnen würde. Für derartige Dimensionierungen sind dann die Anforderungen der Schaltung an den zu überstreichenden Temperaturbereich maßgebend.

Die eben beschriebene Schaltung arbeitet wie folgt:
Der linke Teil der Schaltung bis zum Ausgang des Operationsverstärkers 48 arbeitet als Temperaturmeßschaltung. Zwischen dem Ausgang des Verstärkers 48 und dem Pol 33 herrscht eine Spannung, die mit wachsender Temperatur des durchfließenden Mediums ansteigt. Hierbei muß vorausgesetzt werden, daß der Meßwiderstand 45 dem zu erfassenden Medium zugeordnet ist. Demgemäß nimmt die Spannung zwischen den Leitungen 42 und 49 mit der Temperatur des durchzusetzenden Mediums ab. Mit exakt dieser Spannung wird nun der PTC-Widerstand 30 beaufschlagt, diese Spannung entspricht der Fühlerspannung $U_F$ in Figur 3. Im stationären Meßzustand arbeitet der Transistor 31 als Stromverstärker mit hohem Verstärkungsfaktor, der Operationsverstärker 40 ist bestrebt, die Spannungsdifferenz zwischen den Leitungen 39 und 49 gegen Null zu führen. Das bedeutet, daß nahezu der gesamte Strom, der durch den PTC-Widerstand 30 fließt, auch durch die Kollektor-Emitterstrecke des Transistors 31 und damit durch den Widerstand 32 fließt. Damit ist das an den Klemmen 35 und 36 parallel zum Widerstand 32 abgegriffene Signal proportional dem PTC-Strom.

Die Variation der Fühlerspannung $U_F$ ändert sich mit der Temperatur des Mediums $\vartheta M$ und zwar nach der Beziehung

$$\frac{U_F}{U_O} = \frac{\vartheta_M - \vartheta_K}{\vartheta_0 - \vartheta_K}$$

wobei $\vartheta_0$ eine beliebig vorgebbare Temperatur in °C, $U_O$ die dazugehörige Spannung in Volt, $\vartheta_K$ die Sprungtemperatur des PTC-Widerstandes in °C, $\vartheta_M$ die Mediumtemperatur und $U_F$ die Fühlerspannung in Volt ist.

Diese Definition der Änderung der Fühlerspannung setzt aber eine fast ideale Sprungcharakteristik des PCT-Widerstandesverlaufs voraus. Diese Bedingung ist in der Praxis recht gut erfüllt, zur Erhöhung der Verfahrensgenauigkeit ist es jedoch mitunter zweckmäßig, die endliche Steilheit der Kennlinie zu berücksichtigen und somit von der gegebenen Dimensionsregel abzuweichen. Somit wird ergänzend vorgeschlagen, die Fühlerspannung $U_F$ nach folgender Beziehung zu ändern:

$$\frac{U_F}{U_O} = \frac{\vartheta_M - \vartheta_K + \Delta\vartheta}{\vartheta_0 - \vartheta_K + \Delta\vartheta}$$

wobei $\vartheta_0$ eine beliebig vorgegebene Temperatur in °C ist, $U_O$ die dazugehörige Spannung in Volt, $\vartheta_K$ die Sprungtemperatur des PCT-Widerstandes in °C, $\vartheta_M$ die Mediumtemperatur, $U_F$ die Fühlerspannung in Volt und $\Delta\vartheta$ eine Korrekturgröße in °C ist, die nach folgender Beziehung festgelegt ist:

$$\Delta\vartheta = p \cdot \frac{R_K}{a}$$

wobei p eine dimensionslose Zahl zwischen 0,1 und 10, $R_K$ der PTC-Widerstand in Ohm bei der Temperatur $\vartheta_K$ und a die Steigung der PTC-Widerstandskennlinie in Ohm/°C bei der Temperatur $\vartheta_K$ ist.

In aquivalenter Weise ist es auch möglich, die Fühlerspannung nach der nun folgenden Beziehung zu ändern:

$$\frac{U_F}{U_O} = \frac{\vartheta_M - \vartheta_p}{\vartheta_0 - \vartheta_p}$$

wobei $\vartheta_O$ eine beliebig vorgegebene Temperatur in °C ist, $U_O$ die dazugehörige Spannung in Volt, $\vartheta_M$ die Mediumtemperatur in °C, $U_F$ die Fühlerspannung in Volt und $\vartheta_P$ eine nach folgender Beziehung festgelegte Referenztemperatur ist:

$$\vartheta_p = \vartheta_r - p \cdot \frac{R_r}{a_r}$$

wobei $\vartheta_r$ die im strömungslosen Zustand bei der Mediumtemperatur $\vartheta_M = \vartheta_O$ und der Fühlerspannung $U_F = U_O$ gemessenen Fühlertemperatur in °C, $R_r$ der Widerstandswert des PTC-Fühlers bei der Fühlertemperatur $\vartheta_r$ in Ohm, p eine dimensionslose Zahl zwischen 1 und 10 und $a_r$ die Steigung der PTC-Kennlinie bei der Temperatur $\vartheta_r$ in Ohm/°C ist.

**Ansprüche**

1. Verfahren zum Messen der Geschwindigkeit eines fluiden Mediums innerhalb eines Kanals, mit einem Meßwiderstand mit positivem Temperaturkoeffizienten, der an einer variablen Fühlerspannung $U_F$ liegt und der der Strömung des Mediums ausgesetzt ist, dadurch gekennzeichnet, daß der Meßwiderstand eine durch einen Überexponentiellen Anstieg des Widerstandes definierte Sprungcharakteristik aufweist und im Bereich des überexponentiellen Widerstandsanstiegs betrieben wird, daß der ihn durchfließende Strom als die Meßgröße widerspiegelnder Parameter dient und daß die Fühlerspannung $U_F$ ausschließlich und linear mit der Temperatur $\vartheta_M$ des Mediums variiert wird.

2. Verfahren nach Anspruch 1, dadurch gekennzeichnet, daß sich die Fühlerspannung $U_F$ nach folgender Beziehung ändert:

$$\frac{U_F}{U_O} = \frac{\vartheta_M - \vartheta_K}{\vartheta_O - \vartheta_K}$$

wobei $\vartheta_O$ eine beliebig vorgegebene Tmperatur in °C, $U_O$ die dazu zugehörige Spannung in Volt, $\vartheta_K$ die Sprungtemperatur des PTC-Widerstandes in °Ç, $\vartheta_M$ die Mediumtemperatur in °C und $U_F$ die Fühlerspannung in Volt ist.

3. Verfahren nach Anspruch 1, dadurch gekennzeichnet, daß sich die Fühlerspannung $U_F$ nach folgender Beziehung ändert:

$$\frac{U_F}{U_O} = \frac{\vartheta_M - \vartheta_K + \Delta\vartheta}{\vartheta_O - \vartheta_K + \Delta\vartheta}$$

wobei $\vartheta_O$ eine beliebig vorgegebene Temperatur in °C, $U_O$ die dazugehörige Spannung in Volt, $\vartheta_K$ die Sprungtemperatur des PTC-Widerstandes in °C, $\vartheta_M$ die Mediumtemperatur in °C, $U_F$ die Fühlerspannung in Volt und $\Delta\vartheta$ eine Korrekturgröße in °C ist, die nach folgender Beziehung festgelegt ist:

$$\Delta\vartheta = p \frac{R_K}{a}$$

wobei p eine dimensionslose Zahl zwischen 0,1 und 10, $R_K$ der PTC-Widerstand in Ohm bei der Temperatur $\vartheta_K$ und a die Steigung der PTC-Widerstandskennlinie in Ohm/°C bei der Temperatur $\vartheta_K$ ist

4. Verfahren nach Anspruch 1, dadurch gekennzeichnet, daß sich die Fühlerspannung $U_F$ nach folgender Beziehung ändert:

$$\frac{U_F}{U_O} = \frac{\vartheta_M - \vartheta_p}{\vartheta_O - \vartheta_p}$$

wobei $\vartheta_O$ eine beliebig vorgegebene Temperatur in °C, $U_O$ die dazugehörige Spannung in Volt, $\vartheta_M$ die Mediumtemperatur in °C, $U_F$ die Fühlerspannung in Volt und $\vartheta_p$ eine nach folgender Beziehung festgelegte Referenztemperatur ist:

$$\vartheta_p = \vartheta_r - p \frac{R_r}{a_r}$$

wobei $\vartheta_r$ die im strömungslosen Zustand bei der Mediumtemperatur $\vartheta_M = \vartheta_O$ und der Fühlerspannung $U_F = U_O$ gemessene Fühlertemperatur in °C, $R_r$ der Widerstandswert des PTC-Widerstandes bei der Temperatur $\vartheta_r$ in Ohm, p eine dimensionslose Zahl zwischen 1 und 10 und $a_r$ die Steigung der PTC-Kennlinie bei der Temperatur $\vartheta_r$ in Ohm/°C ist.

5. Elektrische Schaltung zum Messen der Geschwindigkeit eines fluiden Mediums innerhalb eines Kanals mit einem Meßwiderstand mit positivem Temperaturkoeffizienten (30), der an einer Fühlerspannung $U_F$ liegt und der Strömung des Mediums ausgesetzt ist und dessen Ström als die Meßgröße widerspiegelnder Parameter dient, und mit einer Temperaturmeßschaltung mit einem dem gleichen Medium ausgesetzten, mit annähernd linearer Widerstands-Temperaturcharakteristik versehenen Temperaturmeßwiderstand (45), dadurch gekennzeichnet, daß der Widerstand mit positivem Temperaturkoeffizienten (30) eine durch einen überexponentiellen Anstieg des Widerstandes definierte Sprungcharakteristik aufweist und an einer von der gleichen Spannungsquelle (34) abgeleiteten Spannung liegt wie die Temperaturmeßschaltung und daß der Ausgang (49) dieser Temperaturmeßschaltung einen steuerbaren, in Serie mit dem Widerstand mit positivem Temperaturkoeffizienten (30) liegenden Widerstand (31) steuert.

6. Elektrische Schaltung nach Anspruch 5, dadurch gekennzeichnet, daß der Widerstand mit positivem Temperaturkoeffizienten (30) mit einem Anschluß unmittelbar an die Temperaturmeßschaltung, mit dem anderen Anschluß an einen Pol (43) der Betriebsspannungsquelle (34) angeschlossen ist und daß in eine der Spannungsversorgungsleitungen der Temperaturmeßeinrichtung ein Meßwiderstand (32) eingeschaltet ist, an dem das Meßsignal abgegriffen wird.

7. Elektrische Schaltung zum Messen der Geschwindigkeit eines fluiden Mediums innerhalb eines Kanals mit einem Meßwiderstand mit positivem Temperaturkoeffizienten (30), der an einer Fühlerspannung $U_F$ liegt und der Strömung des Mediums ausgesetzt ist, dadurch gekennzeichnet, daß der Widerstand mit positivem Temperaturkoeffizienten (30) eine durch einen überexponentiellen Anstieg des Widerstandes definierte Sprungcharakteristik aufweist und in Reihe mit einem Meßwiderstand (32), an dem das Meßsignal abgegriffen wird, geschaltet ist und daß die Reihenschaltung dieser beiden Widerstände an einen Pol der Betriebsspannungsquelle einerseits und an den Ausgang (49) der Temperaturmeßschaltung, die einen dem gleichen Medium ausgesetzten, mit annähernd linearer Widerstands-Temperaturcharakteristik versehenen Temperaturmeßwiderstand (45) aufweist, andererseits geschaltet ist.

8. Schaltung nach Anspruch 5, dadurch gekennzeichnet, daß der Ausgang (49) der Temperaturmeßschaltung auf den einen, der Widerstand mit positivem Temperaturkoeffizienten (30) auf den anderen Eingang eines Operationsverstärkers (40) gelegt ist und daß der Ausgang des Operationsverstärkers mit der Steuerelektrode des steuerbaren Widerstandes (31) verbunden ist.

9. Schaltung nach einem der Ansprüche 5 bis 8, dadurch gekennzeichnet, daß die Temperaturmeßschaltung mit einem bestimmten und konstanten Bruchteil der Betriebsspannung betrieben ist und daß die Ausgangsspannung der Temperaturmeßschaltung um den Verminderungsfaktor wieder verstärkt wird.

10. Schaltung nach einem der Ansprüche 5 bis 9, dadurch gekennzeichnet, daß der Temperaturmeßwiderstand in der Temperaturmeßschaltung ein Siliciumwiderstand (45) ist.

## Claims

1. A method of measuring the velocity of a fluid within a passage by means of a sensing resistor which has a positive temperature coefficient and a variable sensor voltage $U_F$ is applied to said resistor, which is subjected to the flow of the fluid, characterized in that the sensing resistor has a step characteristic, which is defined by an overexponential rise of the resistance, the sensing resistor is operated in the range of the overexponential resistance rise, the current flowing through the sensing resistor is used as a parameter which reflects the measured variable, and the sensor voltage $U_F$ is varied exclusively and linearly with the temperature $\vartheta_M$ of the fluid.

2. A method according to claim 1, characterized in that the sensor voltage $U_F$ is varied in accordance with the relation

$$\frac{U_F}{U_0} = \frac{\vartheta_M - \vartheta_K}{\vartheta_0 - \vartheta_K}$$

wherein $\vartheta_0$ is any desired pregiven temperature in $°C$, $U_0$ is the associated voltage in volts, $\vartheta_K$ is the step temperature of the PTC resistor in $°C$, $\vartheta_M$ is the fluid temperature in $°C$ and $U_F$ is the sensor voltage in volts.

3. A method according to claim 1, characterized in that the sensor voltage $U_F$ varies in accordance with the relation

$$\frac{U_F}{U_0} = \frac{\vartheta_M - \vartheta_K + \Delta\vartheta}{\vartheta_0 - \vartheta_K + \Delta\vartheta}$$

wherein $\vartheta_0$ is any desired pregiven temperature in $^\circ$C, $U_0$ is the associated voltage in volts, $\vartheta_K$ is the step temperature of the PCT resistor in $^\circ$C, $\vartheta_M$ is the fluid temperature in $^\circ$C, $U_F$ is the sensor voltage in volts and $\Delta\vartheta$ is a correcting variable in $^\circ$C, which is determined in accordance with the following relationship relation:

$$\Delta\vartheta = p\,\frac{R_K}{a}$$

wherein p is a dimensionless number between 0.1 and 10, $R_K$ is the PCT resistance in ohms at the temperature $\vartheta_K$ and a is the slope of the PCT resistance characteristic in ohm/$^\circ$C at the temperature $\vartheta_K$.

4. A method according to claim 1, characterized in that the sensor voltage $U_F$ varies in accordance with the relation

$$\frac{U_F}{U_0} = \frac{\vartheta_M - \vartheta_p}{\vartheta_0 - \vartheta_p}$$

wherein $\vartheta_0$ is any desired pregiven temperature in $^\circ$C, $U_0$ is the associated voltage in volts, $\vartheta_M$ is the fluid temperature in $^\circ$C, $U_F$ is the sensor voltage in volts and $\vartheta_p$ is a reference temperature, which is determined in accordance with the following relation:

$$\vartheta_p = \vartheta_r - p\,\frac{R_r}{a_r}$$

wherein $\vartheta_r$ is the sensor temperature in $^\circ$C measured in a flowless state at the fluid temperature $\vartheta_M = \vartheta_0$ and the sensor voltage $U_F = U_0$, $R_r$ is the resistance of the PCT resistor at the temperature $\vartheta_r$ in ohms, p is a dimensionless number between 1 and 10 and $a_r$ is the slope of the PCT characteristic at the temperature $\vartheta_r$ in ohm/$^\circ$C.

5. An electric circuit for measuring the volocity of a fluid within a passage by means of a sensing resistor (30) which has a positive temperature coefficient and a variable sensor voltage $U_F$ is applied to said resistor, which is subjected to the flow of the fluid and carries a current which serves as a parameter which reflects the measured variable, and a temperature sensing circuit comprising a temperature sensing resistor (45), which is exposed to the same fluid and has an approximately linear temperature characteristic, characterized in that the resistance (30) having a positive temperature coefficient has a step characteristic, which is defined by an overexponential rise of the resistance, a voltage which is derived from the same voltage source (34) as the temperature sensing circuit is applied to the PTC resistor, and the output (49) of that temperature sensing circuit controls a controllable resistor 31, which is connected in series with the resistor (30) having a positive temperature coefficient.

6. An electric circuit according to claim 5, characterized in that the resistor (30) having a positive temperature coefficient has a terminal that is directly connected to the temperature sensing circuit and another terminal that is connected to one terminal (43) of the supply voltage source (34) and one of the voltage supply lines of the temperature sensing means includes a sensing resistor (32) from which the measured-value signal is taken.

7. A method of measuring the velocity of a fluid within a passage by means of a sensing resistor which has a positive temperature coefficient, and a variable sensor voltage $U_F$ is applied to said resistor, which is subjected to the flow of the fluid, characterized in that the resistor (30) having a positive temperature coefficient has a step characteristic which is defined by an overexponential rise of resistance, the PTC resistor is connected in series with a sensing resistor (32), from which the measured-value signal is taken, and the series circuit including said two resistors is connected at one end to a terminal of the supply voltage source and at the other end to the output (49) of the temperature sensing circuit, which comprises a temperature sensing resistor (45), which is exposed to the same fluid and has an approximately linear resistance-temperature characteristic.

8. A circuit according to claim 5, characterized in that the output (49) of the temperature sensing circuit is connected to one input and the resistor (30) having a positive temperature coefficient is connected to the other input of the operational amplifier (40) and the output of the operational amplifier is connected to the control electrode of the controllable resistor (31).

9. A circuit according to any of claims 5 to 8, characterized in that the temperature sensing circuit is operated with a predetermined and constant fractional part of the supply voltage and the output voltage of the temperature sensing circuit is re-amplified by the reduction factor.

10. A circuit according to any of claims 5 to 9, characterized in that the temperature sensing resistor in the temperature sensing circuit is a silicon resistor (45).

**Revendications**

1. Procédé pour la mesure de la vitesse d'écoulement d' un fluide dans une canalisation à l'aide d'une résistance à coefficient de température positif, à laquelle est appliquée une tension $U_F$ variable et qui est exposée au courant du fluide, caractérisé par le fait que la résistance présente une caractéristique définie par une augmentation surexponentielle de sa valeur et est utilisée dans la zone de l'augmentation surexponentielle, que le courant qui la parcourt sert de grandeur de mesure se rapportant à des paramètres et que la tension $U_F$ varie exclusivement et linéairement avec la température $\vartheta_M$ du fluide.

2. Procédé suivant la revendication 1, caractérisé par le fait que la tension $U_F$ varie suivant la relation

$$\frac{U_F}{U_O} = \frac{\vartheta_M - \vartheta_K}{\vartheta_O - \vartheta_K}$$

$\vartheta_O$ représentant une température quelconque préréglée en $^\circ$C, $U_O$ la tension correspondante en volts, $\vartheta_K$ la température critique de la résistance CTP en $^\circ$C, $\vartheta_M$ la température du fluide en $^\circ$C et $U_F$ la tension-sonde en volts.

3. Procédé suivant la revendication 1, caractérisé par le fait que la tension $U_F$ varie suivant la relation

$$\frac{U_F}{U_O} = \frac{\vartheta_M - \vartheta_K + \Delta\vartheta}{\vartheta_O - \vartheta_K + \Delta\vartheta}$$

$\vartheta_O$ représentant une température quelconque préréglée en $^\circ$C, $U_O$ la tension correspondante en volts, $\vartheta_K$ la température critique de la résistance CTP en $^\circ$C, $\vartheta_M$ la température du fluide en $^\circ$C, $U_F$ la tension -sonde en volts et $\Delta\vartheta$ un facteur de correction en $^\circ$C déterminé suivant la relation:

$$\Delta\vartheta = p \frac{R_K}{a}$$

p représentant un nombre sans dimension entre 0,1 et 10, $R_K$ la résistance CTP en ohms à la température $\vartheta_K$ et 'a' la rampe de la caractéristique de la résistance CTP en ohms/$^\circ$C à la température $\vartheta_K$.

4. Procédé suivant la revendication 1, caractérisé par le fait que la tension $U_F$ varie suivant la relation

$$\frac{U_F}{U_O} = \frac{\vartheta_M - \vartheta_p}{\vartheta_O - \vartheta_p}$$

$\vartheta_O$ représentant une température quelconque préréglée en $^\circ$C, $U_O$ la tension correspondante en volts, $\vartheta_M$ la température du fluide en $^\circ$C, $U_F$ la tensionsonde en volts et $\vartheta_p$ une température de référence définie par la relation suivante:

$$\vartheta_p = \vartheta_r - p \frac{R_r}{a_r}$$

$\vartheta_r$ étant la température de la sonde en $^\circ$C à l'état sans courant et à la température du fluide $\vartheta_M = \vartheta_O$, la tension étant $U_F = U_O$, $R_r$ la valeur de la résistance CTP à la température $\vartheta_r$ en ohms, p un nombre sans dimension entre 1 et 10 et $a_r$ la rampe de la caractéristique CTP à la température $\vartheta_r$ en ohms/$^\circ$C.

5. Montage électrique pour la mesure de la vitesse d'écoulement d'un fluide dans une canalisation à l'aide d'une résistance à coefficient de température positif (30), à laquelle est appliquée une tension $U_F$ variable et qui est exposée au courant du fluide et dont le courant sert de grandeur de mesure se rapportant à des paramètres, et avec un montage thermométrique comportant une résistance thermométrique (45) exposée au même fluide et ayant une caractéristique à peu près linéaire, caractérisé par le fait que la résistance à coefficient de température positif (30) présente une caractéristique définie par une augmentation surexponentielle de sa valeur et est connectée à une tension fournie par la source de tension (34) alimentant le montage thermométrique et que la sortie (49) dudit montage agit sur une résistance (31) en série avec la résistance à coefficient de température positif (30).

6. Montage électrique suivant la revendication 5, caractérisé par le fait que la résistance à coefficient de température positif (30) est connectée d'une part directement sur le montage thermométrique, et de l'autre sur un pôle (43) de la source de tension (34), et que dans l'une des lignes d'alimentation du dispositif thermométrique une résistance (32) est incorporée sur laquelle le signal de mesure est prélevé.

7. Montage électrique pour la mesure de la vitesse d'écoulement d'un fluide dans une canalisation à l'aide d'une résistance à coefficient de température positif (30), à laquelle est appliquée une tension $U_F$ variable et qui est exposée au courant du fluide, caractérisé par le fait que la résistance à coefficient de température (30) présente une caractéristique définie par une augmentation surexponentielle de sa valeur et est mise en série avec un résistance (32) sur laquelle le signal de mesure est prélevé, et que ce montage en série de ces deux résistances est relié à un pôle de la source de tension de service, d'une part, et à la sortie (49) du montage thermométrique, de l'autre, qui comprend une résistance thermométrique (45) exposée au même fluide et présentant une caractéristique à peu près linéaire.

8. Montage suivant la revendication 5, caractérisé par le fait que la sortie (49) du montage thermométrique est reliée à l'une des entrées d'un amplificateur opérationnel (40), et la résistance à coefficient de température positif (30), à l'autre entrée dudit amplificateur, et que la sortie de cet amplificateur est reliée à l'électrode de commande du transistor (31).

9. Montage suivant l'une des revendications 5 à 8, caractérisé par le fait que le montage thermométrique est alimenté par une fraction déterminée et constante de la tension de service, et que la tension de sortie dudit montage thermométrique est, elle, amplifiée du facteur de réduction.

10. Montage suivant l'une des revendications 5 à 9, caractérisé par le fait que la résistance thermométrique dans le montage thermométrique est une résistance au silicium (45).

Fig. 1

Fig. 3

Fig. 2

Fig. 4